(19) Europäisches Patentamt
European Patent Office
Office européen des brevets

(11) **EP 3 040 926 A1**

(12) **EUROPEAN PATENT APPLICATION**

(43) Date of publication:
**06.07.2016 Bulletin 2016/27**

(51) Int Cl.:
***G06Q 30/02*** *(2012.01)*

(21) Application number: **15197937.4**

(22) Date of filing: **04.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.01.2015 KR 20150000850**
**16.02.2015 KR 20150023287**
**27.02.2015 KR 20150028087**
**06.03.2015 KR 20150031916**

(71) Applicant: **About Time Corp.**
**Gyeonggi-do 13493 (KR)**

(72) Inventor: **KIM, Jae Chun**
**Seoul 06666 (KR)**

(74) Representative: **Mammel und Maser**
**Patentanwälte**
**Tilsiter Straße 3**
**71065 Sindelfingen (DE)**

(54) **METHOD AND SYSTEM FOR MESSAGE DELIVERY BASED ON ON-DEVICE DATA ANALYSIS, AND COMPUTER PROGRAM THEREFOR**

(57)    Provided are a method and system for delivering a message, and a computer program therefor, the method including: receiving messages from a server to a device of a user; checking at least one feature of user features associated with the user, message features associated with the messages, device features associated with the device, and contextual features associated with the surrounding circumstances; and determining, by the device, whether or not to present at least one message among the messages to the user at a specific time or later in consideration of the at least one feature, wherein the determining whether or not to present the message comprises determining, by the device, whether or not to present the message without sending information about the at least one feature to an outside.

FIG. 2

**Description**

BACKGROUND OF THE INVENTION

Field of the Invention

The present invention generally relates to a method and system for delivering a message, and a computer program therefor. More particularly, the present invention relates to a method and system for delivering a message based on on-device data analysis, which can determine the appropriate time at which to present a message based on data analysis on a user device, or which can select a message to be presented to the user among from a plurality of messages and can present the selected message to the user, and additionally relates to a computer program therefor.

Description of the Related Art

According to the recent rapid development of information communication technologies, services for exchanging messages including letters, images, sounds, and the like using various devices, such as smart phones, mobile phones, PCs (Personal Computers), and the like, have been very variously used.
Furthermore, these messages have been actively utilized as a marketing means by various companies, as well as a communication means among individuals. For example, marketing techniques for sending advertising messages using an SMS (Short Messaging Service), an MMS (Multimedia Messaging Service), or the like have been already very widely utilized.
However, as such, as the messages have been widely utilized, it is problematic in that the messages cause more inconvenience to users because they frequently receive a plurality of messages, including unnecessary messages that are not desired or needed.
In this regard, Korean Patent Laid-Open Publication No. 10-2012-0034907 discloses a system and method for conditionally delivering a message, which can select and present a message according to message receiving conditions set by individual users, such as a time intended for receiving the message, the scope of message sending devices, and the like.
However, even if the conventional system and method are applied, it is difficult to determine appropriate message receiving conditions in minute detail in consideration of users' lifestyles or environments. Furthermore, it is problematic in that it is very inconvenient for the users to set various conditions in detail.
Furthermore, various applications using push messaging for enabling a message to be immediately presented to users via a mobile device have been popularized. Also, marketing techniques for providing coupons or sending product and service information by forming a relationship between companies and customers through social network services (SNS) have also been popularized.
However, a push messaging service is advantageous in that a push message can be immediately presented to users, however such a push messaging service may cause inconvenience to the users when the push message is presented at an inappropriate time or circumstance. In this case, a predetermined message cannot be properly presented, and the users may turn off the push function of the application that has sent the message, or in the worst scenario may delete the application itself.
For example, in a circumstance in which a user plays a game using a smart phone, or drives a car using a navigation application, if an advertising push message pops up on a screen of the smart phone, it is clear that it may cause great inconvenience to the user.
Furthermore, for more efficient push messaging, a method for sending various pieces of information collected in the devices of users, such as smart phones and the like, to a push message server and the like, and for utilizing the information may be considered. However, in this case, there is a risk that various pieces of personal information about users sent to the outside will be utilized for purposes that are not intended by the users, or the users' privacy will be infringed.
Also, from the point of view of marketing providers, since information can be more effectively delivered to users or the response rate of users to messages can be increased if differentiated messages can be delivered according to respective users' characteristics, methods for providing marketing information including differentiated messages and the like by checking information about each user have been tried. For example, Korean Patent Laid-Open Publication No. 10-2007-0109329 (published on November 15, 2007) discloses a method of providing desired information of a customer as a customized message upon log-in of the customer by analyzing information according to the previous purchasing patterns of the customer.
However, in the case of the conventional technology described above, in order to check the characteristics of each user, since a server must collect personal information, such as information about the previous purchasing patterns of individual users and the like, there is the risk that various pieces of collected personal information will be utilized for purposes not intended by individual users, or individual users' privacy will be infringed. Furthermore, in order to classify individual users' characteristics in greater detail, it may be problematic in that a large amount of personal information must be collected on a server and the like.

SUMMARY OF THE INVENTION

Accordingly, the present invention has been made keeping in mind the above problems occurring in the related art, and the present invention is intended to propose a method and system for delivering a message, capable of determining the appropriate time at which to present messages through on-device data analysis, and capable of presenting the message to the user, and to propose a computer program for the method and system.

Also, another object of the present invention is to provide a method and system for delivering a message, capable of selecting and presenting a suitable message for a user among a plurality of messages based on data analysis on the user device, and to provide a computer program for the method and system.

Also, a further object of the present invention is to provide a method and system for delivering a message, capable of preventing infringement on privacy of a user that may occur when information about the user is sent to the outside, and to provide a computer program for the method and system.

In order to achieve the above objects, according to one aspect of the present invention, there is provided a method for delivering a message, including: sending the message from a server to a device of a user; checking at least one feature of user features associated with a device user, message features associated with a message, device features associated with the device, and contextual features associated with the circumstances surrounding the user or the device by using information that is obtainable from the device itself; and determining, by the device, whether or not to present the message to the user at a specific time or later in consideration of the at least one feature, wherein the determining whether or not to present the message includes determining, by the device itself, whether or not to present the message to the user without sending information about the at least one feature to the outside of the device.

At this time, in the determining whether or not to present the message, a decision function for determining whether or not to present the message to the user at a specific time may be used in consideration of the at least one feature. The decision function may be personalized for each user through machine learning using the response characteristics of each user.

Also, in the determining whether or not to present the message, if it is determined that the message is not to be presented at the specific time, a process for determining whether or not to present the message to the user at another specific time or later may be repeatedly performed in consideration of the at least one feature according to a predetermined cycle or at a predetermined appropriate time.

According to another aspect of the present invention, there is provided a method for delivering a message, including: sending a plurality of messages corresponding to attributes of a user from a server to a device; checking attributes of the user using information that can be obtained from the device itself; and presenting at least one message among the plurality of messages to the user of the device in consideration of the attributes of the user, wherein the checking the features of the user includes checking, by the device itself, the features of the user without sending information used for checking the features of the user to the outside.

At this time, the checking the attributes of the user may include checking, by at least one classifier based on machine learning, the features of the user using information that can be obtained from the device.

Also, the checking the attributes of the user may include checking the features of the user using at least one kind of data of the data of a sensor in the device, data regarding the details of use of applications executed in the device, and data created by using applications executed in the device.

According to a further aspect of the present invention, there is provided a method for delivering a message, including: preparing, by a server, a plurality of messages corresponding to attributes of a user; sending the plurality of messages from the server to a device, and presenting, by the device, at least one message among the plurality of messages to the user in consideration of the attributes of the device user checked using information that can be obtained from the device itself without sending the information to the outside.

According to yet another aspect of the present invention, there is provided a method for delivering a message, including: sending messages from a server to a device of a user; and detecting, by the device using information that can be obtained from the device itself, a predefined event of interest derived from the device as the user uses the device; and presenting the messages to the user when the device detects the event of interest, wherein the device detects the event of interest without sending information about the user to the outside with regard to detecting the event of interest.

At this time, the presenting the message may include determining, by the device, whether or not to present the message based on a predetermined probability when the event of interest is detected.

Also, in the presenting the message, the predetermined probability of the device may be a value learned through machine learning in consideration of the response of the user to the message.

Also, in the presenting the message, when the event of interest is detected, the device may present the messages previously sent from the server to the user, or may present the messages to the user after requesting the server to send the messages and receiving the messages from the server.

Also, the method may further include: starting to detect an event of interest when the user starts to use the device; and stopping to detecting the event of interest when the user stops using the device.

According to still another aspect of the present invention, there is provided a method for delivering a message, which is a method for delivering a message capable of presenting messages to a user by sending the messages from a server to a device, including: requesting, by the device, the server to send the messages; and sending the messages from the server to the device so that the messages can be presented to the user, wherein when the device detects a predefined event of interest from the device according to use of the device by the user using information that can be obtained from the device itself, the device may request the server to send the messages, and may present the messages received from the server to the user.

According to still another aspect of the present invention, there is provided a method for delivering a message, including: sending messages from a server to a device of a user; and calculating, using information that can be obtained from the device itself, the interruptibility of the user, which is the probability that the user will respond to the messages when the messages are presented to the user; and determining whether or not to present the messages in consideration of the calculated interruptibility of the user, wherein the device calculates the interruptibility of the user without sending information about the user present in the device to the outside with regard to calculating the interruptibility of the user.

At this time, the determining whether or not to present the messages may include determining whether or not to present the messages to the user in consideration of a predefined state of forbidding messages of the device, as well as the interruptibility of the user.

Also, when the device is in a state in which messages are forbidden, presenting of the messages to the user may be fully prohibited, or when the user performs specific work with the device, presenting of the messages to the user may be prohibited.

Also, the method may include postponing, by a predetermined application activated in the device, presenting of the messages to the user in consideration of the importance of each sender who sends the messages, as well as the interruptibility of the user.

Also, the messages may be presented when the state of forbidding messages is over, or the arrival of the messages may be announced using an alert pop-up or an application icon.

According to still another aspect of the present invention, there is provided a computer program, the computer program being a computer program stored in a readable recording medium and intended for executing each step of the method described above.

According to still another aspect of the present invention, there is provided a server, including: a message preparing unit, adopted to prepare a plurality of messages that can be selected and presented according to the attributes of a user; and a message providing unit, adopted to send the plurality of messages to the device so that the device can present at least one message among the plurality of messages to the user in consideration of the attributes of the user, checked using information that can be obtained from the device without sending the information to the outside.

In accordance with the method and system for delivering a message, and the computer program therefor according to one embodiment of the present invention, after receiving messages sent from a server, the device checks the features of a user, a device, messages or surrounding circumstances, and determines the appropriate time at which to present the messages to the user using the features so that the messages can be presented to the user, and the time at which to present the messages to the user can be property adjusted.

In accordance with the method and system for delivering a message, and the computer program therefor according to one embodiment of the present invention, the attributes of a user who uses the device are checked using information that can be obtained from the device itself, and thereafter, at least one message selected from among a plurality of messages transmitted to the device based on the attributes of the user is presented to the user so that personalized messages that match each user's characteristics can be delivered.

Also, in accordance with the method and system for delivering a message, and the computer program therefor according to one embodiment of the present invention, a device presents messages when a predefined event is detected so that the messages can be delivered at a suitable moment for each user.

Also, in accordance with the method and system for delivering a message, and the computer program therefor according to one embodiment of the present invention, the device presents messages immediately, or postpones presenting the messages in consideration of the interruptibility of the user and the state of forbidding messages, the interruptibility being the probability that the user will respond to the message, so that the messages can be presented to the user at a more appropriate time.

Also, in accordance with the method and system for delivering a message, and the computer program therefor according to one embodiment of the present invention, information included in a device is analyzed without sending information about the device user to the outside, and accordingly, messages are delivered to the user, so that the problem of infringement on privacy, which may occur when sending the information about the user to the outside, can be prevented from occurring.

BRIEF DESCRIPTION OF THE DRAWINGS

The accompanying drawings, which are included as part of the detailed description to provide an easily understood description of the present invention, are intended to provide embodiments of the present invention and to describe technical ideas of the present invention, in which:

FIG. 1 is a block diagram of a message delivery system based on on-device data analysis according to one embodiment of the present invention;
FIG. 2 is an explanatory view of the message delivery system based on on-device data analysis according to the one embodiment of the present invention;
FIG. 3 is a view explaining the determination of a time at which to push a message with regard to the message delivery system based on on-device data analysis according to the one embodiment of the present invention;
FIG. 4 is a block diagram of a message delivering device based on on-device data analysis according to one embodiment of the present invention;
FIG. 5 is a flow chart of a message delivering method based on on-device data analysis according to one embodiment of the present invention;
FIG. 6 is an explanatory view of a message delivery system based on on-device data analysis according to one embodiment of the present invention;
FIG. 7 is a block diagram of a message delivering device based on on-device data analysis according to one embodiment of the present invention;
FIG. 8 is a flow chart of a message delivering method based on on-device data analysis from the point of view of the device according to one embodiment of the present invention;
FIG. 9 is a flow chart of a message delivering method based on on-device data analysis from the point of view of a server according to one embodiment of the present invention;
FIG. 10 is a block diagram of a message delivering server based on on-device data analysis according to one embodiment of the present invention;
FIG. 11 is a finite state automata (FSA) showing a method for delivering a message based on on-device data analysis according to one embodiment of the present invention;
FIG. 12 is a flow chart of a method for delivering a message based on on-device data analysis according to one embodiment of the present invention;
FIG. 13 is a block diagram showing a message delivering device based on on-device data analysis according to one embodiment of the present invention;
FIG. 14 is a flow chart showing a method for delivering a message based on on-device data analysis according to one embodiment of the present invention; and
FIG. 15 is a block diagram showing a message delivering device based on on-device data analysis according to one embodiment of the present invention.

DETAILED DESCRIPTION OF THE INVENTION

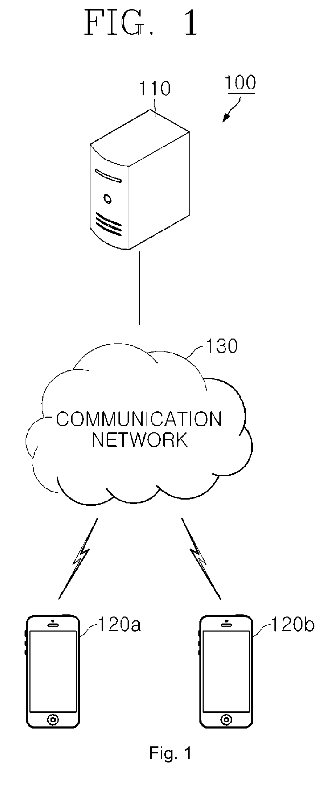

The present invention may be embodied in different forms and may have various embodiments. Specific embodiments will be hereinafter described in detail with reference to the accompanying drawings.
In the following description, it is to be noted that, when the functions of conventional elements and the detailed description of elements related with the present invention may make the gist of the present invention unclear, a detailed description of those elements will be omitted.
Terms such as 'first' and 'second' may be used for explaining various constitutive elements, but the constitutive elements should not be limited to these terms. These terms are used only for the purpose of distinguishing a constitutive element from other constitutive elements.
A method and system for delivering a message based on on-device data analysis according to one embodiment of the present invention, and a computer program therefor, will be herein below reviewed in detail with reference to the accompanying drawings.
First, FIG. 1 illustrates a block diagram of a message delivery system 100 based on the on-device data analysis according to one embodiment of the present invention. As shown in FIG. 1, the message delivery system 100 based on the on-device data analysis according to one embodiment of the present invention may include: a server 110 adopted to send a message to devices 120a and 120b of users; and at least one device 120a, 120b adopted to determine an appropriate time at which to present a message based on the on-device data analysis of the user, or adopted to select an appropriate message for the user from among a plurality of messages and to present it to the user.

At this time, with regard to the on-device data analysis of the user, the device 120a, 120b does not send information about the user to the outside, and determines an appropriate time at which to present a message by analyzing information through the device 120a, 120b itself, or selects a suitable message for the user from among the plurality of message.

Here, the device 120 may be implemented using various information processing apparatuses or communication apparatuses used by users. For example, the device may include various devices including PCs (Personal Computers), notebook computers, mobile phones, tablet PCs, navigation devices, smart phones, PDAs (Personal Digital Assistants), PMPs (Portable Multimedia Players), or digital broadcasting receivers, such as DVB (Digital Video Broadcasting), smart TVs, and the like. Of course, in addition to the apparatuses listed above, all apparatuses capable of receiving data transmitted from a server and processing the data appropriately may be applied without special limitation.

The message may be a push message immediately presented to the user, an SMS (Short Messaging Service) or MMS (Multimedia Messaging Service) service, an in-app message used inside an application, a message of a messenger application, or the like, and may include various messages capable of presenting various content, such as text, music, pictures, videos, and the like, to the user's device.

The server 110 and the devices 120a and 120b may exchange data via a communication network 130. The communication network 130 may be configured in various structures. For example, the communication network may be composed of one or a combination of two or more networks of various types of existing known networks, such as an IP network capable of transmitting and receiving data using an Internet Protocol, all IP networks in which different networks are integrated based on IPs, a wireless LAN including a wibro (Wireless broadband) network, and a Wi-Fi network, a WPAN, a wire communication network, an HSDPA (High Speed Downlink Packet Access) network, a satellite communication network, an LTE network, and the like. In addition to the networks listed above, all networks may be applied without special limitation as long as the networks can appropriately perform the exchange of data between the server 110 and the devices 120a and 120b.

Furthermore, the message delivery system 100 based on on-device data analysis according to the one embodiment of the present invention may determine an appropriate time at which to present the message based on various types of on-device data analysis, or may determine a suitable message for the user from among a plurality of messages.

For example, the message delivery system may check the features of a user, a device, a message, or surrounding circumstances based on data analysis on the user device, and may also check an appropriate time at which to present the message to the user using the features, and the message delivery system may select a suitable message for the features of the user from among a plurality of messages, and may then present the selected message to the user.

Also, the message delivery system may present a message to the user after detecting an event of interest, predefined based on on-device data analysis, or may determine a time at which to present the message after calculating the interruptibility of the user, which is the probability that the user will respond to the messages.

Herein below, a method and system for delivering a message based on various types of data analysis on a user device, and a computer program therefor will be described in detail according to each embodiment.

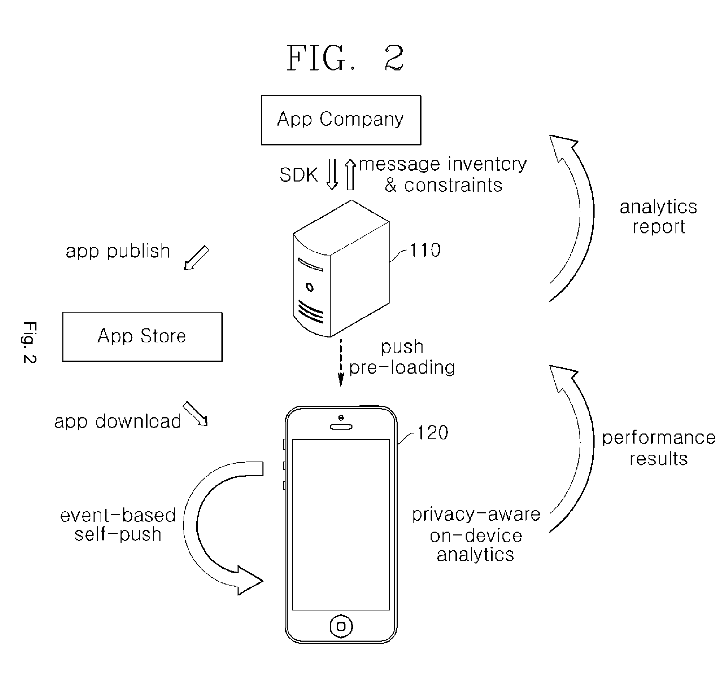

First, FIG. 2 presents a view illustrated for explaining a context aware message delivery system 100 based on data analysis on a user device according to one embodiment of the present invention.

The context aware message delivery system 100 according to one embodiment of the present invention may include: a server 100 adopted to send a message to a user device; and at least one device 120a, 120b adopted to detect the features of a user, a device, a message or surrounding circumstances, to determine the appropriate time at which to present a message to a user using the features, and to present the message to the user.

At this time, the device 120a, 120b determines the appropriate time at which to present the message to the user in consideration of the features of the user, the device, the message or surrounding circumstances in the device 120a, 120b itself without sending information about the user, such as the features of the user, the device, the message or surrounding circumstances, to the outside.

In addition, the server 110 may send the message, and information about a time limit for presenting the message to the user to the device 120a, 120b. At this time, the device 120a, 120b may determine whether or not an appropriate time at which to present the message to the user has arrived in consideration of the time limit along with the features of the user, device, message or surrounding circumstances.

Also, when the devices 120a and 120b determine that the message is to be presented to the user at a later time because the time at which the message is received from the server 110 is not an appropriate time at which to present the message to the user, a process for determining an appropriate time or a specific time at which to present the message in consideration of the features of the user, device, message, surrounding circumstances, or the like may be repeated according to predetermined cycles.

Also, after receiving the message sent from the server 110, the devices 120a and 120b may use a decision function for determining whether or not to present the message to the user at a specific time in consideration of the features of the user, device, message, surrounding circumstances, or the like. At this time, the decision function may be personalized according to each user through machine learning in light of the response characteristics of the user to the messages so that more accurate judgment results for each user can be derived.

As one embodiment of the present invention, FIG. 2 exemplifies a structure in which the server 110 transmits a push message to the device 120, which is a smart phone of the user, and the device 120 of the user, such as a smart phone or the like, pushes the message to the user through the device 120, such as the smart phone or the like, at an appropriate time at which to present the received push message.

At this time, the device 120 including the smart phone or the like may receive from the server 110 a push message, along with information about a time limit within which to present the push message to the user. At this time, after storing the push message, the device 120, such as the smart phone or the like, determines an appropriate time at which to present the push message to the user in consideration of the features of a user, a message, a device or surrounding circumstances.

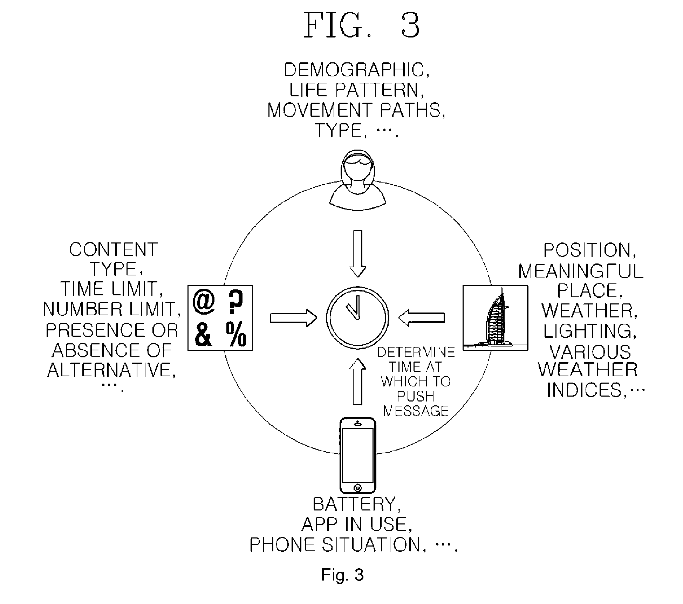

Furthermore, FIG. 3 exemplifies an explanatory view in which an appropriate time at which to present the push message to the user is determined in consideration of the features of a user, a message, a device or the surrounding circumstances. As can be seen from FIG. 3, the device 120 of the user may determine an appropriate time at which to present the message to the user in consideration of the following: i) the features of the user, such as the demographic information (gender, age, etc.) of the user, the life pattern and cycles, movement paths and frequently visited places, a user's current status (e.g., moving or not, driving or not, using public transportation or not, etc.), a user's type (e.g., being sensitive to push messages or not, etc.), and the like; ii) message features including message contents associated with a message, a time limit for transmitting the message, the sender of the message, the kind of message content (e.g., shopping, news, etc.) and the like; iii) device features, such as the state of the device battery, currently running applications (e.g., a game, navigation, chatting, etc.), whether or not the user is on the phone, various phone states (e.g., charging or not, Wi-Fi on or not, whether or not a mute function is turned on, etc.), and the like; and iv) contextual features including the time of day, day of the week, whether it is currently a weekday or the weekend, location, weather, humidity, noise, lighting, various environmental indices, and the like.

For example, in the case where the user operates a navigation application of the device 120, such as a smart phone or the like, while driving, if a push message pops up on a screen of the device 120, he or she can be considerably inconvenienced. In contrast, in the case where the user is spending his or her lunch time at home on the weekend, if a pizza discount coupon is forwarded via a push message, there is a relatively high probability that the user will be interested in the discount coupon.

As such, a series of features may be obtained by various sources of information on, for example, i) information that is directly inputted by the user in the device 120 (e.g., the user's age, residential area, and the like), ii) information that can be checked through the device 120, such as a sensor of a smart phone, and the like, and iii) information that can be obtained through an external API (Application Program Interface) call, and the like.

Such a series of features may be expressed by a feature vector. For example, with respect to the $i^{th}$ message among a plurality of messages to be presented by the device 120 for pushing, a feature vector at a specific time may be expressed as $F_i = (f_{i,1}, ..., f_{i,n})$. Here, n represents the number of used features. More specifically, for example, with regard to determining the appropriate time at which to present a message to the user, if it is assumed that three features, such as the current time, the weather, and the amount of battery charge remaining, are used, the feature vector may be expressed as $F_i$ = (2:30 p.m., serenity, 50%).

Subsequently, with respect to the $i^{th}$ message at a specific time t, when the value of the feature vector $F_i$ is calculated through an external API call or the like of a sensor of the device 120, such as a smart phone, the device 120 may determine whether or not to push the $i^{th}$ message to the user at the time t in consideration of the value of the feature vector. At this time, a decision function $D(F_i)$ may be used to determine whether or not to present the message to the user at the specific time in consideration of the feature vector $F_i$.

The decision function $D(F_i)$ is personalized according to each user through a machine learning technique using a user's response characteristics regarding messages presented to users so that accurate customized results can be calculated for each user. For example, various machine learning techniques, such as a logistics regression, a Bayesian network, Adaboost, an SVM (Support Vector Machine), a Naïve Bayes, and the like, may be applied as the machine learning technique.

Furthermore, in order to derive the decision function $D(F_i)$, training data is needed. The training data may be expressed as a pair of the feature vector and the user response result. That is, the training data may be expressed as T = (Fj, Rj), (j = 1, ... , m). At this time, m represents the number of training data instances. For example, when a battery percentage remaining was 50% at 2:30 p.m. on a fine day, if a user responded to a push message, the training data may be expressed as T = ((2:30 p.m., serenity, 50%), YES).

The response result $R_j$ of the user may be expressed as a value, such as the amount of time it take to respond to the message, as well as whether or not the user reacted to the message, thereby constituting the training data.

As described above, as the training data for users is accumulated, the decision function $D(F_i)$ is personalized for each user so that the response of each user can be more accurately predicted.

In addition, parameters required for construction of the decision function $D(F_i)$ may have predetermined initial values. Furthermore, a decision function $D(F_i)$ initialized to reflect the demographic information (gender, age, and the like) of users, or the profile information of users may be used.

The initial values for the parameters of the decision function $D(F_i)$ may be gradually personalized according to each user by accommodating each user's responses to the message.

According to one embodiment of the present invention, a series of actions of the device, such as a smart phone or the like, may be implemented in an SDK (Software Development Kit) library form. The SDK may be transmitted to an App Company of FIG. 2 so as to be embedded in an application. Subsequently, the application including the SDK may be installed and run in the device 120 of the user, such as a smart phone or the like, through an App store.

The App Company may deliver a message inventory & constraints, which should be delivered to the device 120, to the server 110 and thus may request sending a push message to the device 120, such as a smart phone or the like, on which the application is running.

At this time, data transmitted from the App Company to the server 110 may include: the title of a push message, the push message content, the time limit within which to present the push message to the user, and the like. Furthermore, the data may include information about the location or the object to which the push message is presented.

The server 110 transmits the data relating to the push message requested from the App Company to the device 120, such as a smart phone. The server 110 may transmit the data relating to the push message to the device 120, such as a smart phone, at an appropriate time in consideration of the load on the server 110, a time limit within which to present the message, and the like, wherein it is preferable that the message must be presented by a predetermined time before the time limit. Accordingly, when presentation of the push message is not urgent, the time at which to present the push message to the device 120 may be appropriately adjusted, so that it is also possible to present the push message later.

Also, the device 120, such as a smart phone or the like, may transmit performance analysis results based on the user responses to the push message to the server 110. At this time, when personal information including the feature vector and the like is transmitted, there is the possibility that each user's privacy will be infringed. Due to this, in one embodiment of the present invention, only information associated with response data of the user to the push message and the decision function $D(F_i)$, personalized for each user, is transmitted, so that the personal information of the user can be protected, and the performance regarding the response of the user to the push message can be analyzed. Furthermore, the performance analysis result may be provided to the App Company in the form of an analytics report through post-processing.

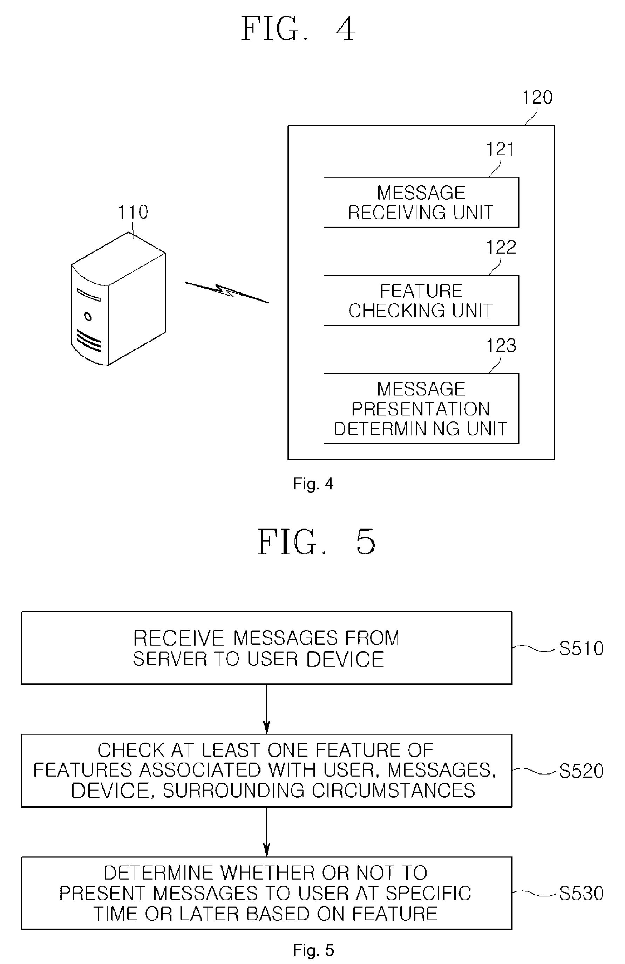

FIG. 4 illustrates a block diagram of a context aware message delivering device 120 based on on-device data analysis according to one embodiment of the present invention. As can be seen from FIG. 4, the context aware message delivering device 120 according to this embodiment of the present invention may include: a message receiving unit 121; a feature checking unit 122; and a message presentation determining unit 123.

First, the message receiving unit 121 receives a message sent from the server 110.

Also, the feature checking unit 122 checks at least one feature of user features associated with a user of the device 120, message features associated with a message, device features associated with the device 120, and contextual features associated with the circumstances surrounding the user or the device 120. As previously reviewed through FIG. 3, the feature checking unit 122 checks: i) user features including demographic information (gender, age, etc.) associated with the user, the life pattern and cycle, traveling paths and frequently visited places, a user's current status (e.g., moving or not, driving or not, using public transportation or not, etc.), a user's type (e.g., being sensitive to push messages or not, etc.), and the like; ii) message features including message content associated with the message, a time limit within which to present the message, the sender of the message, the type of message contents (e.g., shopping, news, etc.) and the like; iii) device features, such as the charge percentage remaining in the battery of the device, a currently running application (e.g., a game, navigation, chatting, etc.), whether or not the user is on the phone, various phone states (e.g., charging or not, Wi-Fi on or not, whether or not a mute function is turned on, etc.), and the like; and iv) contextual features including the time of day, day of the week, whether it is a weekday or the weekend, location, weather, humidity, noise, lighting, various environmental indices, and the like.

At this time, the feature checking unit 122 may obtain the features described above via various sources based on i) information that is directly inputted by the user in the device 120 (e.g., the user's age, area of residence, etc.), ii) information that can be checked through the device 120 including a sensor of a smart phone or the like, and iii) information that can be obtained through an external API (Application Program Interface) call, and the like.

Finally, the message presentation determining unit 123 determines whether to present the message to the user at a specific time or later in consideration of at least one of the features described above. At this time, the message presentation determining unit 123 determines whether or not to present the message without sending information about the at least one feature to the outside of the device 120 so that personal information of the user can be prevented from being leaked.

Also, the server 110 may transmit information about a time limit within which to present the message to the user, as well as the message.

Furthermore, when determining whether or not to present the message to the user at the specific time, the message presentation determining unit 123 may use a decision function $D(F_i)$ in consideration of the at least one feature. At this time, the decision function $D(F_i)$ is personalized for each user through machine learning, using users' responses as training data, so that result values for each user can be more accurately derived. For example, various machine learning techniques, such as Logistics Regression, Bayesian network, Adaboost, SVM (Support Vector Machine), Naïve Bayes, and the like may be applied as the machine learning techniques.

Also, as for the information about the user's response to the message, only information associated with the decision function $D(F_i)$ personalized for each user may be sent to the server 110, so that the personal information of the user can be protected and the characteristics of the user's response to the message can be analyzed.

When the message presentation determining unit 123 determines not to present the message at a specific time, the message presentation determining unit may repeatedly perform a process for determining whether or not to present the message to the user at a specific time or later in consideration of the at least one feature according to a predetermined cycle or at a predetermined appropriate time.

Furthermore, as the time limit within which to present the message to the user approaches due to repeatedly performing the determination process, a threshold for the decision function for determining whether or not to present the message to the user at the specific time may be decreased. For example, when there is a week to go until the time limit, the threshold for the decision function may be set to 90, whereas when there is about one day to go until the time limit, the threshold value of the decision function may be reduced to 60, so that the risk of failure to present the message to the user by the time limit can be reduced.

Also, the device 120 may not present the message to the user during the period when the requirements for delaying message presentation, which are predetermined by the user or the message presentation determining unit 123, are satisfied. That is, when the user sets the requirements for delaying message presentation in advance in order to more strictly manage the reception of push messages at undesired times, or when the message presentation determining unit 123 sets the requirements for delaying message presentation in advance, the device may not present the message to the user during the period within which the requirements are satisfied, regardless of the result value of the decision function $D(F_i)$. For example, the push message may be prevented from being presented on the screen of the device when the user is sleeping, or is driving a car. Furthermore, when the device 120, including a smart phone or the like, may automatically determine whether the user is sleeping or is driving a car, the message presentation determining unit 123 of the device 120 may set the requirements for delaying message presentation in advance.

FIG. 5 illustrates a flow chart of a context aware message delivering method according to one embodiment of the present invention. As can be seen from FIG. 5, the context aware message delivering method according to the embodiment of the present invention may include: receiving messages from a server 110 to a user device 120 (S510); checking at least one of user features associated with the user of the device 120, message features associated with messages, device features associated with the device 120, and contextual features associated with the circumstances surrounding the user or the device 120 by using information that is obtainable from the device itself (S520); and determining, by the device 20, whether or not to present the message to the user at a specific time or later in consideration of the at least one feature (S530), wherein the determining whether or not to present the message (S530) comprises determining whether or not to present the message to the user without sending information about the at least one feature to the outside of the device, so that the risk of leakage of personal information of the user and the risk of infringement on the privacy of the user can be efficiently reduced.

Also, in the receiving the message (S510), a time limit for presenting the message to the user may be sent along with the message. At this time, in the determining whether or not to present the message (S530), an appropriate time at which to present the message to the user may be determined in consideration of the time limit along with the at least one feature.

Also, in the determining whether or not to present the message (S530), a decision function $D(F_i)$ for determining whether or not to present the message to the user at a specific time may be used in consideration of the at least one feature. The decision function $D(F_i)$ is personalized for each user through machine learning using the response characteristics of each user so that customized result values for each user can be more accurately calculated. For example, various machine learning techniques, such as Logistics Regression, Bayesian network, Adaboost, SVM (Support Vector Machine), Naïve Bayes, and the like, may be applied as the machine learning technique.

Also, in the determining whether or not to present the message (S530), when predetermined requirements for delaying message presentation are satisfied, the message may not be presented to the user. In such a case, regardless of the result value of the decision function $D(F_i)$, the message may not be presented to the user during a period when the requirements for delaying message presentation are satisfied.

Furthermore, the message delivering method according to the embodiment of the present invention may include: sending the message from the server 110 to the device 120 so that the device can present the message to the user at a time when predetermined requirements are satisfied. At this time, the device 120 may check at least one of user features associated with the user, message features associated with the message, device features associated with the device 120, and contextual features associated with the circumstances surrounding the user or the device 120, and may then determine whether or not to present the message to the user at a specific time or later in consideration of the at least one feature without sending the at least one feature to the outside of the device 120, so that the risk of leakage of personal information, and the risk of infringement on privacy can be controlled, and the message can be also presented to the user at an appropriate time.

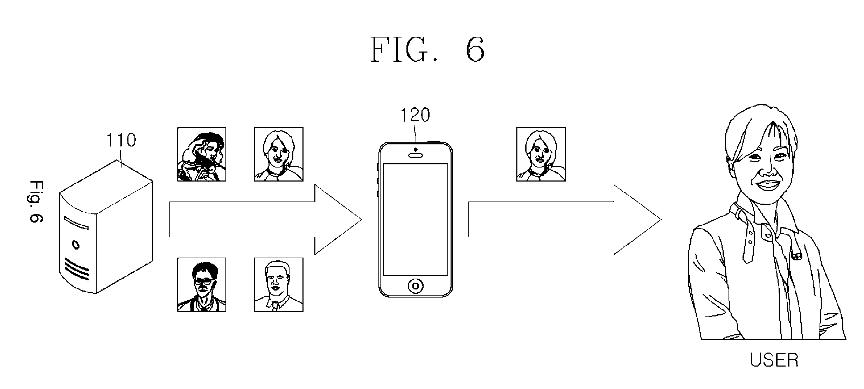

FIG. 6 shows a view illustrated for explaining a customized message delivery system 100 based on on-device data analysis according to one embodiment of the present invention.

The customized message delivery system 100 based on on-device data analysis according to the embodiment of the present invention may include: a server 100 adopted to send a plurality of messages, which can be selected and sent according to the attributes of each user, to a device 120; and the device 120 adopted to check the attributes of a user who uses the device 120 using information, which is obtainable from the device 120 itself, and to present the user with at least one message appropriate for him or her. At this time, the device 120 checks the attributes of the user without sending the information used for checking the features of the user to the outside.

The server 110 may send a plurality of messages, which can be selected and sent according to the attributes of the user, to the device 120, and accordingly, the device 120 may check the attributes of the device user and may then present at least one message suitable for the attributes of the device user among the plurality of messages to the user.

By way of detailed example, a case in which the server 110 sends an advertising message regarding apparel products to the device 120 will be reviewed in detail with reference to FIG. 6. As can be seen from FIG. 6, as previously described, the server 110 sends four advertising messages resulting from each combination of advertising messages for apparel products for men and women, and for teens and adults via a communication network 130 and the like. Subsequently, the device 120, which has received the four advertising messages, determines the attribute of the user who uses the device, namely, whether or not the device user is a man, a woman, a teenager, or an adult, and selects and provides a suitable message for the user of the device among the four advertising messages.

Depending on whether the user is a man or a woman, an efficient product advertisement, advertising message, and the like may be largely changed. Even with regard to age and the like of the device user, a more suitable advertising message for the user may be presented according to the attributes of the device user so that the effect of the advertisement can be increased. In particular, in the customized message delivery system 100 based on on-device data analysis according to the embodiment of the present invention, the device 120 itself determines the attributes of the device user without sending personal information of the device user to the outside, such as the server 110 and the like, so that the personal information and privacy of the device user can be efficiently prevented from being leaked and being infringed, respectively. Furthermore, the attributes of the user may be checked by utilizing various pieces of information, which can be obtained from the device 120, without the risk of leakage of personal information. Thus, the customized message delivery system 100 is advantageous in that the attributes of each user can be more specific, and can be accurately calculated.

With regard to the attributes of the user, various values may be selected as needed, and more specific attributes may be selected. For example, the attributes of the user may be constituted by dividing the teens and adults, previously reviewed, into teens and adults in age groups of teens, 20s and 30s, 40s and 50s, and 60 and over, in greater detail. Moreover, an attribute associated with a residential area (city A, city B, city C, rural area D, fishing village E and the like) of the device user may be used.

Thus, if various more specific attributes of the user can be accurately checked as described above, since messages can be efficiently presented, the advertising effects and the like resulting therefrom can be maximized.

Subsequently, the method of checking the attributes of the device user by the device 120 will be reviewed in detail as follows. The device may determine the attributes of the device user using classifiers based on information that can be obtained from the device 120. For example, in the case of FIG. 6, since a gender classifier may determine whether the device user is a man or a woman, and an age classifier may determine the age of the device user, an appropriate message for the user may be selected from among the four messages based on the attributes of the user derived using the gender classifier and the age classifier.

At this time, the classifiers may be software that performs the task of selecting and classifying necessary information from among various pieces of information obtained from the device 120, or may be implemented as an apparatus including hardware and the like according to need.

The information, which can be obtained from the device 120, is converted into features so that the features can be used by the classifiers, and various pieces of following information may be utilized as information in the device 120 that can be used for deriving the features:

(1) Various kinds of sensor data in the device: an illumination sensor, a proximity sensor, an accelerator sensor, GPS (Global Positioning System) data, a compass sensor, and the like;
(2) Data relating to the details of use of applications executed in the device: The kind of applications used by the device user, an application use pattern, an application use time, an application use region, music listened to, videos viewed, the records of calls, voice data, browsing history, and the like; and

(3) Data created by using applications executed in the device: SNS profiles of Facebook and the like, photos, videos, text messages, contacts, e-mails, schedules, favorite restaurants, visited regions, and the like.

For example, the age group or gender of the device user may be predicted based on data about music listened to by the device user. Also, the gender of the device user may be analyzed by analyzing voice data. Furthermore, when a Facebook profile and the like can be used, information about various attributes of the device user can be obtained. However, this case may cause an additional problem, such as the need of a procedure for receiving consent from the device user regarding provision of the information, and the like.

The classifiers perform classification using data about the features, and the features may be expressed as a feature vector. Accordingly, a feature vector for the user i of the device may be expressed as $F_i = (f_{i,1}, \ldots, f_{i,n})$. For example, if it is assumed that four features, namely the most frequently used application, the most frequently viewed video category, the call volume during the last week, and the number of uses of the word "sister" in text messages during the last week, are used, the feature vector may be expressed as $F_i$ = (Facebook, drama, 60 minutes, 10 times).

When the value of the feature vector Fi for the user i is collected from the device 120, the classifiers are executed so that the attributes of the device user can be analyzed based on the feature vector. For example, the gender classifier $S(F_i)$ may determine whether the user i is a man or woman using the value of the feature vector $F_i$ for the user i of the device.

As previously described, in addition to the gender classifier, the classifier may be very variously implemented as an age classifier, a job classifier, a region classifier, and the like. Thus, the attributes of the device user may be more variously divided.

Moreover, the classifiers may check the features of the user who uses the device using various pieces of information that can be obtained from the device 120. However, at this time, when determining the features to be used, it is preferable to more properly select the features to be used in consideration of whether or not the features are sensitive to privacy, whether or not the features of the device user can be efficiently checked, computational resources and costs required for collecting and processing the features, and the like.

For example, when text message data of the user is used as a feature, even though it may be easy to check the gender of the device user, it is preferable to consider that there is a large risk that the privacy of the device user will be infringed. Meanwhile, when the gender of the device user is derived based on data about music played by the device user as a feature, even though the risk of infringement on privacy may be reduced, it is problematic in that the accuracy of classification can be slightly reduced.

Also, the classifiers may be implemented based on various machine learning methods, such as Logistics Regression, Bayesian network, AdaBoost, SVM (Support Vector Machine), Naïve Bayes, and the like.

In order to implement efficient classifiers based on the machine learning methods as described above, a process for training the classifiers using training data is needed. At this time, the training data may be constituted of a feature vector $F_i$ and the attribute of the device user that are paired. That is, the training data may be expressed as T = $(F_i(k)$, $A_i(k))$, (k = 1, \ldots , m), wherein m represents the number of instances of training data. For example, if the device user having the value of the feature vector $F_j$ previously reviewed is a man, the training data may be expressed as T = ((Kakao talk, drama, 60 minutes, 10 times), man).

Also, the attributes of the user correspond to a set of result values determined by the classifiers. For example, in the gender classifier, the attribute of the user may be {man, woman}, and in the region classifier, the attribute of the user may be {city A, city B, city C, rural area D, fishing village E, and the like}. Furthermore, various attribute values of the user may be obtained according to the various kinds of classifiers.

Also, the data for training the classifiers may be collected using various methods. For example, there may be a method of gathering a plurality of users having a user attribute of interest (the age group of women in their 20s as a detailed example), and thereafter collecting many feature vectors from each device 120 used by the gathered users. Also, when the attributes of the users of each device can be checked by a specific application (e.g., the case in which the gender or age of the user of each device can be checked using user profile information obtained from Facebook), a large amount of training data can be collected from each device based on the attributes of the users.

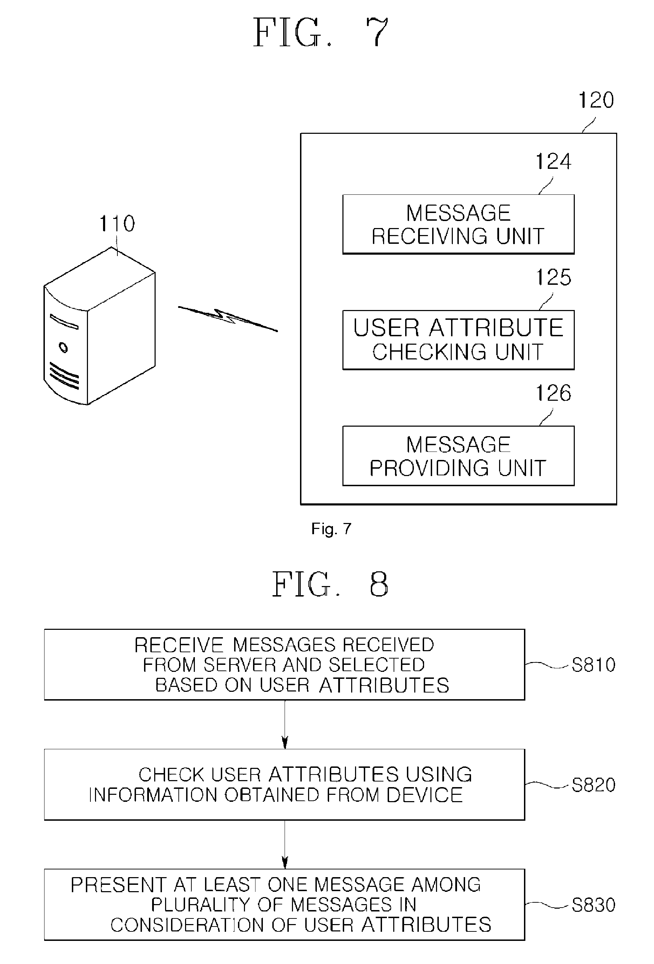

FIG. 7 illustrates a block diagram of the device 120 transmitting a customized message to a user according to one embodiment of the present invention. As can be seen from FIG. 7, the device 120 transmitting a customized message to a user according to the embodiment of the present invention may include: a message receiving unit 124; a user attribute checking unit 125; and a message providing unit 126.

First, the message receiving unit 124 receives a plurality of messages that can be selected by and sent from the server 110 according to the attributes of the user.

Also, the user attribute checking unit 125 checks the attributes of the user who uses the device 120 using information that can be obtained from the device 120.

Finally, the message providing unit 126 selects at least one message from among the plurality of messages, thereby providing the selected message to the user. At this time, the message presentation determining unit 123 checks the attributes of the user without transmitting information used for checking the attributes of the user to the outside of the device 120 so that the risk of the leakage of personal information of the user to the outside can be efficiently reduced.

Also, the user attribute checking unit 125 may enable checking of the attributes of the user using at least one classifier operated based on machine learning using information that can be obtained from the device 120. Furthermore, the user attribute checking unit 125 may check the attributes of the user using at least one kind of data among the data of a sensor in the device 120, data regarding the details of use of applications executed in the device 120, and data created by using applications executed in the device 120.

Also, the server 110 sending customized messages to the user according to another aspect of the present invention sends a plurality of messages, which can be selected and presented according to the attributes of the user, to the device 120, thereby enabling the device 120 to provide at least one message selected from among the plurality of messages to the user in consideration of the attributes of the user who uses the device 120, the attributes being checked using information that can be obtained from the device 120, without sending the information to the outside.

Subsequently, FIG. 8 illustrates a flow chart of a customized message delivering method according to one embodiment of the present invention. As can be seen from FIG. 8, the customized message delivering method according to the embodiment may include: receiving a plurality of messages, which can be selected and presented according to the attributes of a user, from the server 110 to the device 120 (S810); checking the attributes of the user using information that can be obtained from the device 120 itself (S820); and presenting at least one message among the plurality of messages to the device user in consideration of the attributes of the device user (S830), wherein the checking the attributes of the user (S820) includes checking, by the device 120, the attributes of the user without sending information used for checking the attributes of the user to the outside so that the risk of leakage of personal information of the device user or the risk of infringement on the privacy of the device user can be efficiently reduced.

Also, in the checking the attributes of the user (S820), at least one classifier operated based on machine learning may check the attributes of the user using information that can be obtained from the device 120.

Furthermore, in checking the attributes of the user (S820), the attributes of the user may be checked using at least one kind of data among the data of a sensor in the device 120, data regarding the details of use of applications executed in the device 120, and data created by using applications executed in the device 120.

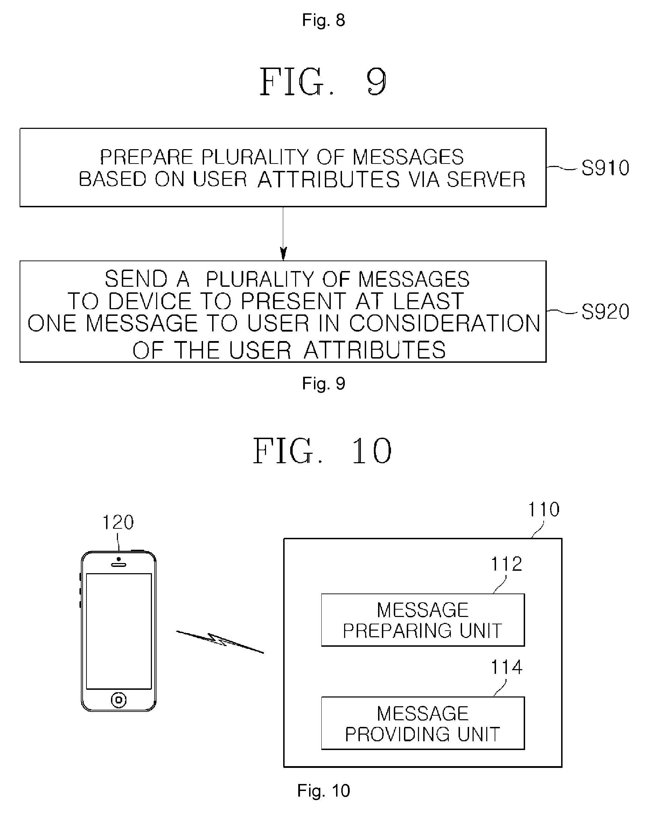

Also, FIG. 9 exemplifies a flow chart of a message transmitting method based on on-device data analysis from the point of view of a server according to one embodiment. The customized message delivering method based on on-device data analysis may include: preparing, by the server 110, a plurality of messages that may be selected and presented according to the attributes of a user (S910); sending the plurality of messages from the server 110 to the device 120, and presenting, by the device 120, at least one message among the plurality of messages to the user in consideration of the attributes of the device user, checked using information that can be obtained from the device 120 itself without sending the information to the outside (S920), so that the attributes of each user can be accurately and minutely checked, messages suitable for each user can be efficiently presented, and the personal information and privacy of each user can be prevented from being leaked or being infringed.

Also, FIG. 10 illustrates a block diagram of a message delivering server 110 based on on-device data analysis according to one embodiment of the present invention. As shown in FIG. 10, the message delivering server 110 based on on-device data analysis according to the embodiment of the present invention may include: a message preparing unit 112 adopted to prepare a plurality of messages that can be selected and presented according to the attributes of a user; and a message providing unit 114 adopted to send the plurality of messages to the device 120 so that the device 120 can present at least one message among the plurality of messages to the user in consideration of the attributes of the user checked using information that can be obtained from the device without sending the information to the outside.

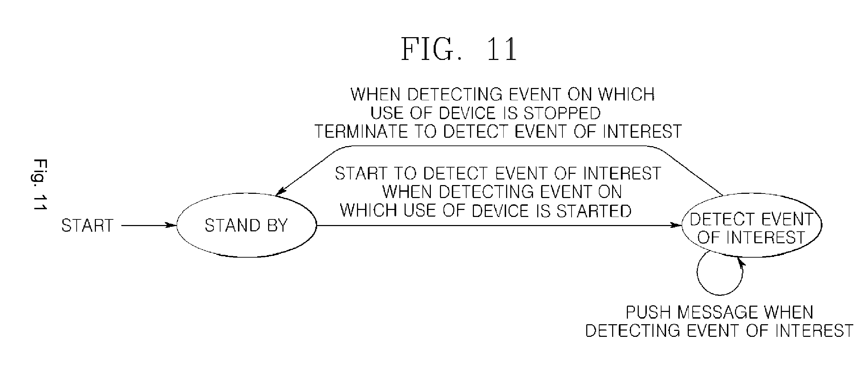

FIG. 11 illustrates a finite state automata (FSA) for explaining a method for presenting a message using an event of interest based on on-device data analysis according to one embodiment of the present invention.

First, in the method using an event of interest based on on-device data analysis according to the embodiment of the present invention, as a user starts using the device 120, a predefined event generated from the device 120 is detected, and when the event of interest is detected, a message received from the server 110 may be presented to the user.

At this time, the device 120 may present the message to the user when a predefined event generated from the device 120 according to the use of the device 120 by the user is detected, thereby presenting the message to the user by selecting a suitable time that enables the message to attract the user's attention and does not disturb the user.

More specifically, the device 120 according to this embodiment of the present invention determines a time to present a message to the user based on various events generated during a process in which the user uses the device 120 so as to present the message by avoiding a time when the user performs specific work, and efficiently checks breakpoints, which are present between activities of the user performed using the device 120, for presentation of the message. For example, when a message pops up on a screen of the device during a process in which the user uses an application, the probability of attracting the user's attention may be reduced. Thus, when the message is pushed to the user by detecting the time when the user finishes using the application, the probability of attracting the user's attention regarding the message may be increased.

Also, the device 120 typically presents a message received from the server 110 to the user, but is not necessarily limited thereto. According to the circumstances, the case in which the device 120 presents a message or the like generated from the device itself to the user may also be applied by the present invention.

Moreover, with regard to detecting the event of interest, the device 120 may detect the event of interest without leaking information on the user to the outside.

The server 110 sends predetermined messages to the device 120 so that the device 120 can present at least one of the messages to the user of the device 120. At this time, the server 110 may present the messages to the device 120 in advance, and thus, the device 120 may store the messages and may then present at least one of the messages to the user when a predefined event generated from the device 120 according to the use of the device 120 by the user is detected. Alternatively, after the device 120 has detected the event of interest, when the device 120 requests the server 110 to send messages, the server 110 may send the messages to the device 120 so that the messages can be presented to the user.

Also, the device 120 detects the event of interest, which is pre-defined, generated from the device 120 according to use of the device 120 by the user, and thereafter presents the messages to the user, so that the messages can be delivered to the user at an appropriate time for the user.

Here, as one embodiment of the present invention, the events generated from the device 120 including a smart phone or the like may be largely divided into the following two kinds.

1) Low-level events: These events mean events that can be announced from the operating system (OS) of the device 120 from inside or outside applications, wherein examples of the events may include: an event on which charging of a battery is started, an event on which the screen of the device 120 is turned on, an event on which the user puts the phone down, an event on which earphones are put in the device 120, an event on which an accelerometer value is changed, and the like. When a low-level event is generated, it can be announced from the operating system and the like to the application installed in the device 120.

2) High-level events: These events, which are events defined using at least one low-level event, may be defined so as to show specific actions or situations of the user or the device 120. For example, the position of the device 120, such as whether or not the device 120 is lying flat, and the like, may be determined using a value, such as pitch, roll, yaw or the like, measured by a sensor and provided by the operating system of the device 120, and an event regarding a specific action of the user, such as whether or not the user has started running or the like, may be also determined using time series data of accelerometer sensor measurement values.

Subsequently, for presenting a message based on an event occurrence, at least one specific event capable of increasing the effectiveness of a message in attracting the user's attention may be selected, and the selected event may be defined as an event of interest. More specifically, for example, various events, such as an event on which the user terminates an application after using the application, an event on which the user changes the device 120 from a vibration mode to a sound mode, an event on which the user presses a home button, an event on which the user stops running occurs, and the like, may be designated as events of interest. Also, at least event of interest may be defined. Furthermore, events, which differ from each other according to the user, may be defined so that the message presenting effect can be increased.

The method for delivering a message using the event of interest based on on-device data analysis according to the embodiment of the present invention will be hereinafter reviewed in greater detail with reference to FIG. 11.

First, as shown in FIG. 11, when the method for delivering a message using the event of interest based on on-device data analysis according to the embodiment of the present invention is started, an event on which the user starts to use the device is waited for. For example, an event on which a screen of the device 120, including a smart phone or the like, is turned on may be used as the event on which the user starts to use the device.

When the event indicating that the user starts to use the device 120 is detected, an event of interest (for example, a low-level event, such as an event on which the user changes the device 120 from a vibration mode to a sound mode, and a high-level event, such as an event on which the user stops running occurs), which can be considered as being appropriate as a time to present a message, is detected.

Subsequently, when an event of interest is detected, the device 120 presents a message to the user. At this time, there is no need to necessarily decisively determine whether or not the message is presented, and whether or not the message is presented may be probabilistically determined. Furthermore, the message presentation probability may change according to each type of event. For example, when an event on which the vibration mode of the device 120 is changed to the sound mode occurs, the message may be presented with a probability of 0.5. Meanwhile, when an event on which the user stops running occurs, the message may be presented with a probability of 0.2.

Moreover, the probability of presentation of the message may be determined using various machine learning methods including Logistics Regression, Bayesian network, AdaBoost, SVM (Support Vector Machine), Naïve Bayes, Learning Automata, and the like based on responses of the user to the message, rather than being determined by an arbitrary value. That is, in the case in which a message is presented to the user in response to a specific type of event, the message presentation probability for each event may be optimized in such a manner as to increase the message presentation probability with regard to the occurrence of an event when the user responds to the message based on the event, or in such a manner as to reduce the message presentation probability in response to the occurrence of an event when the user does not respond to the message based on the event. At this time, whether or not the user responds to the message may be variously defined. For example, it may be determined in various methods, such as checking whether or not the user reads the presented message within a specific time.

More specifically, for example, in the case in which an event of an event type e is detected, and a message presentation probability is $q_e$, when the user responds to the presented message, the message presentation probability $q_e$ may be updated and given by Mathematical Equation 1.

## [Mathematical Equation 1]

$$q_e \leftarrow \min\{ q_e + \beta(1 - q_e), q_e^{max} \}$$

Where $\beta$ represents a learning rate having a value between 0 and 1, and $q_e^{max}$ represents the maximum probability value that can be possessed by $q_e$. $q_e^{max}$ may be differently defined according to the type of event.

Also, when the user does not respond to the presented message, the message presentation probability $q_e$ may be updated as shown in Mathematical Equation 2.

## [Mathematical Equation 2]

$$q_e \leftarrow \max\{ q_e - \beta q_e, q_e^{min} \}$$

where, $q_e^{min}$ means the minimum probability value that can be possessed $q_e^{min}$ by $q_e$. may be also differently defined according to the type of event.

Furthermore, when an event of interest is detected, a message for the event of interest is not necessarily required to be presented immediately. The message may be presented after a predetermined time has passed since the occurrence of the event of interest. In this way, a messaging time may not appear be deterministic to the user.

The delay time of transmission of the message may be arbitrarily determined as a specific value, or may be determined differently according to the type of event. Furthermore, in addition to being set to an arbitrary value, the delay time may be also calculated using various types of machine learning such as Logistics Regression, Bayesian network, AdaBoost, SVM (Support Vector Machine), Naïve Bayes, Learning Automata, and the like in consideration of the response of the user to the message.

Subsequently, as shown in FIG. 11, when an event on which the user stops using the device (for example, an event on which the screen of the device 120 including a smart phone or the like is turned off, or the like) is detected, the occurrence of an event on which the user resumes using the device is waited for while in a standby state after completing detection of the event of interest.

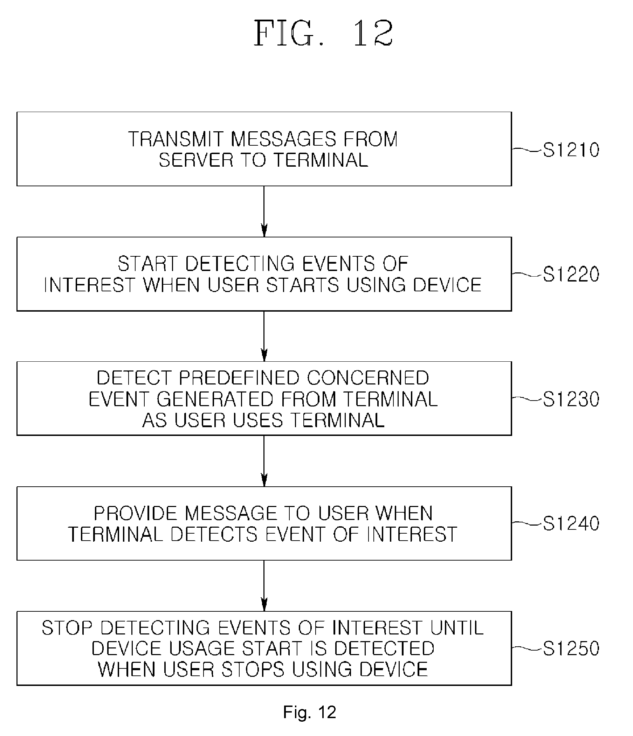

Also, FIG. 12 exemplifies a flow chart of a method for delivering a message using an event of interest based on on-device data analysis according to one embodiment of the present invention. As shown in FIG. 12, the method using an event of interest based on on-device data analysis according to the embodiment of the present invention may include: receiving messages from a server to a user device (S1210); detecting an event of interest when an event on which the user starts to use the device 120 is detected (S1220); detecting, by the device 120, the predefined event generated from the device 120 as the user uses the device 120 (S1230); presenting at least one message among the messages to the user when the device 120 detects the event of interest (S1240); and stopping detecting the event of interest until start of the device usage is detected, when detecting an event that the user stops using the device 120 (S1250).

At this time, in the presenting the message (S1240), the device 120 may determine predetermined probability of whether or not to present the message when the event of interest is detected, and the device 120 may also present the message after the lapse of a predetermined amount of time when the event of interest is detected. Here, the predetermined probability or the predetermined time may be a value learned through machine learning or the like in consideration of a response of the user to the message, or may be a value that is continuously updated in consideration of the response of the user.

Also, in the presenting the message (S1240), when the event of interest is detected, the device 120 may present at least one message among the messages previously transmitted from the server 110 to the user, or may transmit the message to the user in such a manner as to present the message after requesting the server 110 to transmit the messages and receiving the messages from the server 110. Furthermore, the device 120 may transmit a message created from or possessed by the device 120 itself, rather than messages transmitted from the server 110, to the user according to circumstances.

Also, in the detecting the event of interest (S1230), the device 120 may detect the event of interest without leaking information about the user to the outside with respect to detecting the event of interest so that the problem of infringement on privacy, which may occur when the information about the user is transmitted to the outside, can be prevented from occurring.

Thanks to the detecting whether or not the user starts to use the device

(S1220) and the detecting the finish of use of the device (S1250), it is advantageous in that resource consumption (battery consumption, usage of a central processing unit, and the like) of the device 120 can be reduced. However, according to the circumstances, the detecting whether or not the user starts to use the device (S1220) and the detecting the finish of use of the device (S1250) may be omitted.

Also, the method for delivering a message using an event of interest based on device data analysis according to the embodiment of the present invention is a method for delivering a message that is performed in such a manner as to send messages from the server 110 to the device 120, and to presenting, by the device, at least one message from the messages to the user, wherein the method may include: requesting, by the device 110, the server 110 to send the messages; and sending the messages from the server 110 to the device 120 so that the messages can be presented to the user. At this time, when the device 120 detects a predefined event generated from the device 120, the device requests the server 120 to send the messages, and thereafter, the device presents the messages to the user so that the messages can be delivered to the user at an appropriate time.

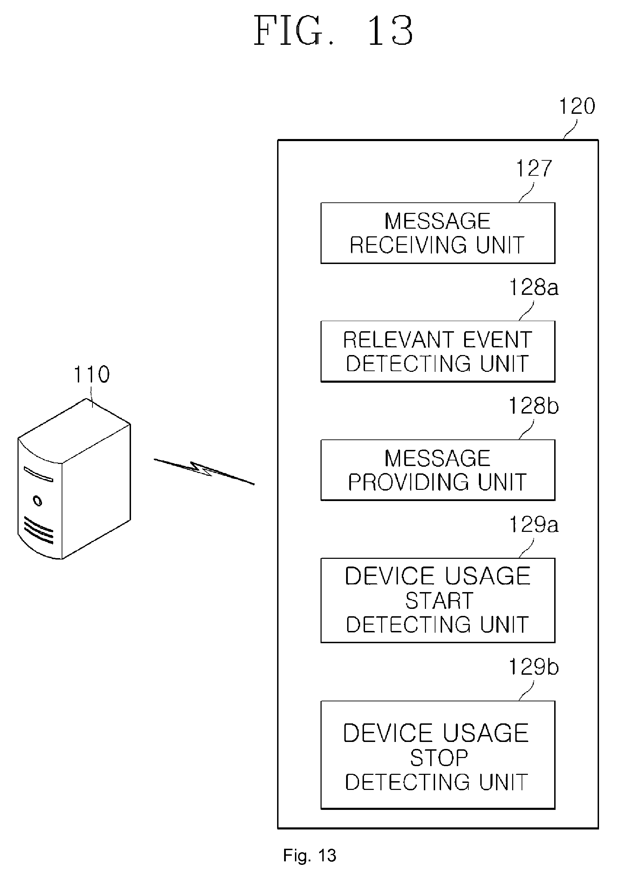

FIG. 13 illustrates a block diagram of the device 120 for delivering a message using an event of interest based on on-device data analysis according to one embodiment of the present invention. As shown in FIG. 13, a block diagram of the device 120 for delivering a message using an event of interest based on on-device data analysis according to the embodiment of the present invention may include: a message receiving unit 127; a relevant event detecting unit 128a; a message providing unit 128b; a device usage start detecting unit 129a; and a device usage stop detecting unit 129b.

First, the message receiving unit 127 receives the messages sent from the server.

Also, the relevant event detecting unit 128a detects a predefined event generated from the device as the user uses the device 120.

Subsequently, when the event of interest is detected, the message providing unit 128b presents the message to the user. At this time, the message providing unit 128b may utilizes a predetermined probability of whether or not to present the message, or may present the message after the lapse of a predetermined amount of time.

Furthermore, when the message providing unit 128b detects the event of interest, the message providing unit may present at least one message among the previously sent messages from the server, to the user, or may present the message to the user after requesting the server to send the messages and receiving the messages.

Also, when the device usage start detecting unit 129a detects an event on which the user starts to use the device 120, the relevant event detecting unit 128a is operated. Also, when the device usage stop detecting unit 129b detects an event on which the user stops using the device 120, the operation of the relevant event detecting unit 128a is stopped, and the device usage start detecting unit 129a is operated. When the device usage start detecting unit 129a and the device usage stop detecting unit 129b are used, it is advantageous in that resource consumption (battery consumption, usage of a central processing unit, and the like) of the device 120 may be reduced. However, according to the circumstances, the device usage start detecting unit 129a and the device usage stop detecting unit 129b may be omitted.

Also, the server 110 for delivering a message using an event of interest based on on-device data analysis according to one embodiment of the present invention may include: a message request receiving unit (not depicted) adopted to receive a request for message sending from the device 120; and a message transmission unit (not depicted) adopted to transmit the messages to the device 120. Subsequently when the device 120 detects a predefined event generated from the device 120 as the user start using the device 120, the device may request the server 110 to send the messages and may present the message sent from the server to the user.

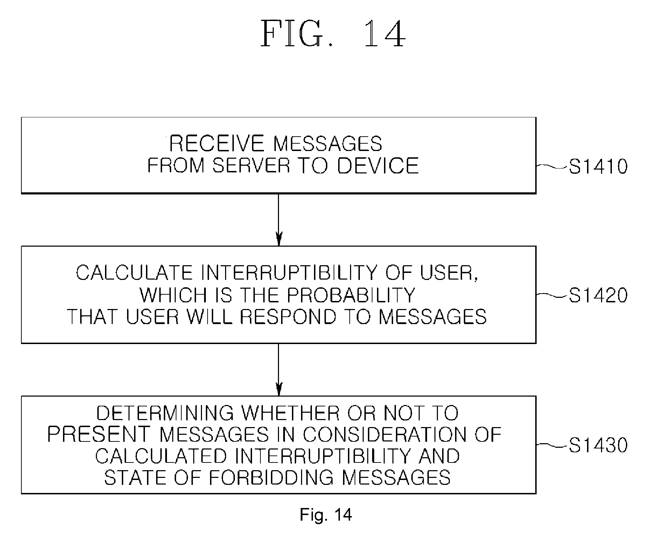

FIG. 14 exemplifies a flow chart showing a method for delivering a message using the notions of interruptibility and forbidden state of the user based on on-device data analysis according to one embodiment of the present invention.

As shown in FIG. 14, the method for delivering a message using the interruptibility and the forbidden state of the user based on on-device data analysis according to the embodiment of the present invention may include: receiving messages from a server to a device of a user (S1410); calculating the interruptibility of the user, which is the probability that the user will respond to the messages (S1420); and determining whether or not to present the messages in consideration of the calculated interruptibility and a predefined forbidden state of the user of the device 120 (S1430).

At this time, the device 120 may calculate the interruptibility of the user or may check the forbidden state without leaking information about the user included in the device to the outside, so that the personal information of the user can be prevented from being leaked to the outside.

Also, the device 120 is not necessarily required to consider both the interruptibility and the forbidden state of the user, and primarily determines whether or not to present the messages in consideration of the interruptibility of the user. When the device is in a state in which message presentation is forbidden, the state being a predefined specific state, an element to prohibit messages may be added.

At this time, when the device 120 is in the state at which messages are forbidden, presentation of the messages to the user may be completely prohibited, or presentation of the messages to the user may be selectively prohibited only when the user performs specific task with the device 120, such as playing a game or playing a video with the device 120.

Furthermore, with regard to determining whether or not to present the messages, the messages may be immediately presented, or presenting of the messages may be postponed in consideration of the importance of each sender who sends the messages.

Also, when the message is not immediately presented to the user, and presenting of the messages is postponed because the calculated interruptibility of the user is low, or the device is in the state in which the messages are forbidden, arrival of the messages may be announced to the user using an alert pop-up or an application icon.

The method for delivering a message using the interruptibility and the forbidden state of the user based on device data analysis according to the embodiment of the present invention will be hereinafter reviewed in greater detail.

The device 120 according to the embodiment of the present invention may present the messages to the user at an appropriate time in consideration of the interruptibility of the user. Here, the interruptibility of the user means the probability that the user will respond to the messages when the messages are presented. The interruptibility of the user described above may be implemented by extracting features from various pieces of information collected from the device 120, namely, user features associated with the user, message features associated with the messages, device features associated with the device, and contextual features associated with the circumstances surrounding the user or the device, and by designating rules, or the interruptibility of the user may be implemented by utilizing the feature values at each message delivery time and the response of the user to the messages as training data, and thereafter by performing training of the classifiers using the training data. At this time, various machine learning methods, such as Logistics Regression, Bayesian network, AdaBoost, SVM (Support Vector Machine), Naïve Bayes, Learning Automata and the like, may be used for the training of the classifiers.

For example, when the user watches a video with the device 120 in the state of being immersed in the video, or when the user plays a game with absorbed interest, there is a low probability that the user will respond to the messages. On the contrary, when the user is looking at the device 120 while no application is being executed on the screen of the device 120, or when the device is located around the user and the sound is turned on, there is a high probability that the user will respond to the messages.

At this time, with regard to determining the interruptibility of the user, it is preferable that the device 120 determine the interruptibility of the user without sending personal information of the user to the outside of the device 120 so that the personal information of the user can be protected.

Furthermore, as one embodiment of the present invention, in order to minimize inconvenience to the user, a notion of forbidden state during which message delivery is prohibited may be defined. Accordingly, when the current state of the device is in the forbidden state, it may be determined that it is not allowed to immediately present the messages without considering the result of the interruptibility of the user.

Furthermore, the forbidden state may be categorized according to the level of messaging prohibition. For example, forbidden state may be divided into the following states according to the level of causing the user inconvenience. Thus, the allowance level for the presentation of messages may be different according to each level of forbidden state.

(1) Strictly forbidden state:

For example, this state means the state in which a device has a battery capacity of 1 % or less, or when the current time is after midnight.

(2) Moderately forbidden state:

For example, this state means the state in which a user is watching a video with a device, the user is playing a game, or the user is navigating using the device.

(3) Weakly forbidden state:

For example, this state means the state in which the user is talking on the phone with the device, the user is reading news with the device, or the user is editing or viewing a document.

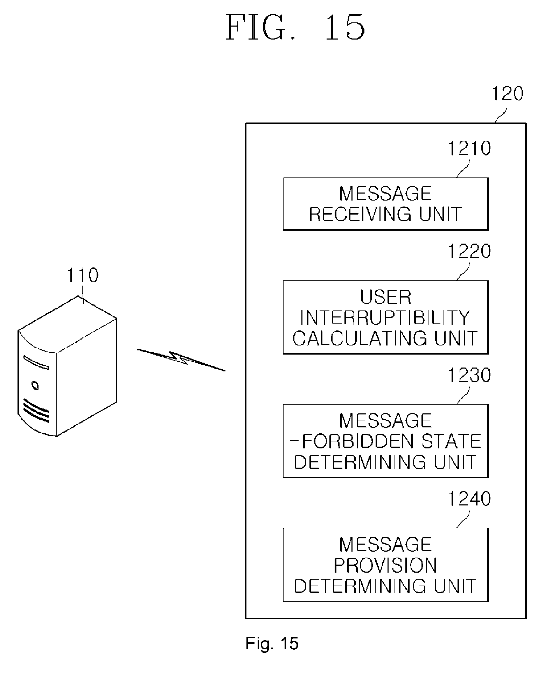

Also, FIG. 15 exemplifies a block diagram of the device 120 for delivering messages using the interruptibility of a user and a forbidden state based on data analysis at the device according to one embodiment of the present invention. As shown in FIG. 15, the device 120 for providing messages using the interruptibility of a user and a forbidden state based on data analysis at the device according to the embodiment of the present invention may include: a message receiving unit 1210 adopted to receive messages from a server; a user interruptibility calculating unit 1220 adopted to calculate a value of interruptibility of a user, wherein 'interruptibility' means the probability that the user will respond to the message when the message is presented; and a forbidden state determining unit 1230, adopted to determine whether or not the device 120 is in a state of forbidding messages; and a message provision determining unit 1240 adopted to determine whether or not to immediately present the messages through the device to the user in consideration of the calculated value of the interruptibility of the user and the level of the forbidden state.

At this time, the message provision determining unit 1240 may determine whether or not to present messages in consideration of the importance of each sender who sends the messages. Furthermore, the message provision determining unit 1240 may present the messages when the forbidden state is over, or may be operated in such a manner as to announce the arrival of the messages using an alert pop-up or an application icon.

A computer program according to another aspect of the present invention is a computer program stored in a readable recording medium and intended for executing each steps of the method according to the embodiment of the present invention, previously reviewed with regard to the computer. At this time, the computer program may include a high-quality language code that can be executed in the computer using an interpreter and the like, as well as machine language code that is made by a complier. Also, examples of the computer include, but are not limited to, a personal computer (PC), a notebook computer, and the like, and the computer includes a server, a smart phone, a tablet PC, a PDA, a mobile phone, a central processing unit (CPU), and the like, thereby including all information processing units capable of executing the computer program. Furthermore, examples of the recording medium may include: a hard disk, a floppy disk, a magnetic medium, such as a magnetic tape, a CD-ROM, an optical medium, such as a DVD, a magneto-optical medium, such as a floptical disk, a hardware device for storing and executing program commands, such as a ROM, a RAM, a flash memory, and the like.

Although the embodiments of the present invention have been described for illustrative purposes, those skilled in the art will appreciate that various modifications, additions and substitutions are possible, without departing from the scope and spirit of the invention as disclosed in the accompanying claims. Accordingly, the embodiments described in the present invention are intended for explaining the technical ideas of the present invention, but should not be construed as limiting the technical ideas. The scope of protection of the present invention should be interpreted based on the accompanying claims, and all technical ideas within the equivalent scope of the claims should be interpreted as being included in the scope of rights of the present invention.

**Claims**

1. A method for delivering a message based on on-device data analysis, comprising:

   receiving messages from a server to a device of a user;
   checking at least one feature of user features associated with the user, message features associated with the messages, device features associated with the device, and contextual features associated with surrounding circumstances; and
   determining, by the device, whether or not to present at least one message among the messages to the user at a specific time or later in consideration of the at least one feature,
   wherein the determining whether or not to present the message comprises determining, by the device, whether or not to present the message without sending information about the at least one feature to an outside.

2. The method of claim 1, wherein the determining whether or not to present the message is performed by using a decision function for determining whether or not to present the message to the user at the specific time in consideration of the at least one feature, and by personalizing the decision function for each user through machine learning based on a response characteristic of the user regarding the presented message.

3. The method of claim 1, wherein the determining whether or not to present the message comprises repeatedly performing a process for determining whether or not to present the message to the user at another specific time or later in consideration of the at least one feature according to a predetermined cycle or at a predetermined appropriate time, when it is determined that the message is not to be presented at the specific time.

4. A method for delivering a message, comprising:

receiving a plurality of messages corresponding to various attributes of a user from a server to a device;
checking attributes of the user using information that can be obtained from the device itself; and
presenting at least one message among the plurality of messages to the user of the device in consideration of the attributes of the user,
wherein the checking the attributes of the user includes checking, by the device itself, the attributes of the user without sending information used for checking the attributes of the user to the outside.

5. The method of claim 4, wherein the checking the attributes of the user comprises checking, by at least one classifier operated based on machine learning, the attributes of the user using information that can be obtained from the device.

6. The method of claim 4, wherein the checking the attributes of the user comprises checking the attributes of the user using at least one kind of data of the data of a sensor in the device, data regarding the details of use of applications executed in the device, and data created by applications executed in the device.

7. A method for delivering a message, comprising:

preparing, by a server, a plurality of messages corresponding to various attributes of a user; and
sending the plurality of messages from the server to a device, and presenting, by the device, at least one message among the plurality of messages to the user in consideration of the attributes of the device user, checked using information that can be obtained from the device itself without sending the information to the outside.

8. A method for delivering a message, comprising:

receiving messages from a server to a device of a user;
detecting, by the device using information that can be obtained from the device itself, a predefined event generated from the device as the user uses the device; and
presenting the messages to the user when the device detects the event of interest,
wherein the device detects the event of interest without sending information about the user to the outside with regard to detecting the event of interest.

9. The method of claim 8, wherein the presenting the message comprises determining, by the device, whether or not to present the message based on a predetermined probability when the event of interest is detected.

10. The method of claim 9, wherein in the presenting the message, the predetermined probability of the device is a value learned through machine learning in consideration of user responses to the messages.

11. The method of claim 9, wherein in the presenting the message, when the event of interest is detected, the device presents messages previously sent from the server to the user, or presents the messages to the user after requesting the server to send the messages and receiving the messages from the server.

12. The method of claim 8, further comprising:

starting detection of an event of interest when an event on which the user starts to use the device is detected; and
stopping the detection of the event of interest until the start of the device usage is detected when an event on which the user stops using the device is detected.

13. A method for delivering a message, which is a method for presenting messages to a user by sending the messages from a server to a device, comprising:

requesting, by the device, the server to send the messages; and
receiving the messages from the server by the device so that the messages can be presented to the user,
wherein when the device detects a predefined event generated from the device according to use of the device by the user using information that can be obtained from the device itself, the device may request the server to send the messages, and may present the messages received from the server to the user.

14. A method for delivering a message, comprising:

receiving messages from a server to a user device; and
calculating, using information that can be obtained from the device itself, interruptibility of the user, which is a probability that the user will respond to the messages when the messages are presented to the user; and determining whether or not to present the messages in consideration of the calculated interruptibility of the user, wherein the device calculates the interruptibility of the user without sending information about the user associated with the device to an outside with regard to calculating the interruptibility of the user.

15. The method of claim 14, wherein the determining whether or not to present the messages comprises determining whether or not present the messages to the user considering a predefined forbidden states of the device, as well as the interruptibility of the user.

16. The method of claim 15, wherein when the device is in the forbidden state, presentation of the messages to the user is prohibited according to the given level of the forbidden state, or when the user performs a specific task with the device, presentation of the messages to the user is prohibited.

17. The method of claim 14, comprising: postponing, due to a predetermined application executed at the device, presentation of the messages to the user in consideration of importance of a sender who sends the messages, as well as the interruptibility of the user.

18. The method of claim 15, wherein the messages are presented when the forbidden state of the messages is finished, or arrival of the messages is announced using an alert pop-up or an application icon.

19. A computer program that is stored in a readable recording medium and is intended for executing steps described in any one of claims 1 to 18 in a computer.

20. A server, comprising:

a message preparing unit adopted to prepare a plurality of messages that can be selected and presented according to attributes of a user; and
a message providing unit adopted to send the plurality of messages to a device,
whereby the device can present at least one message among the plurality of messages to the user in consideration of attributes of the user checked using information that can be obtained from the device without sending the information to an outside.

# FIG. 1

Fig. 1

# FIG. 2

App Company

SDK ⇓⇑ message inventory & constraints

app publish

110

analytics report

App Store

push pre-loading

app download

120

performance results

event-based self-push

privacy-aware on-device analytics

Fig. 2

EP 3 040 926 A1

# FIG. 3

DEMOGRAPHIC,
LIFE PATTERN,
MOVEMENT PATHS,
TYPE, ….

CONTENT
TYPE,
TIME LIMIT,
NUMBER LIMIT,
PRESENCE OR
ABSENCE OF
ALTERNATIVE,
….

@ ?
& %

DETERMINE
TIME AT
WHICH TO
PUSH
MESSAGE

POSITION,
MEANINGFUL
PLACE,
WEATHER,
LIGHTING,
VARIOUS
WEATHER
INDICES,…

BATTERY,
APP IN USE,
PHONE SITUATION, ….

Fig. 3

# FIG. 4

120

121

MESSAGE
RECEIVING UNIT

122

FEATURE
CHECKING UNIT

123

MESSAGE
PRESENTATION
DETERMINING UNIT

110

Fig. 4

# FIG. 5

| RECEIVE MESSAGES FROM SERVER TO USER DEVICE | S510 |

| CHECK AT LEAST ONE FEATURE OF FEATURES ASSOCIATED WITH USER, MESSAGES, DEVICE, SURROUNDING CIRCUMSTANCES | S520 |

| DETERMINE WHETHER OR NOT TO PRESENT MESSAGES TO USER AT SPECIFIC TIME OR LATER BASED ON FEATURE | S530 |

Fig. 5

# FIG. 6

Fig. 6

USER

# FIG. 7

120

124

MESSAGE
RECEIVING UNIT

125

USER ATTRIBUTE
CHECKING UNIT

126

MESSAGE
PROVIDING UNIT

110

Fig. 7

# FIG. 8

| RECEIVE MESSAGES RECEIVED FROM SERVER AND SELECTED BASED ON USER ATTRIBUTES | S810 |

| CHECK USER ATTRIBUTES USING INFORMATION OBTAINED FROM DEVICE | S820 |

| PRESENT AT LEAST ONE MESSAGE AMONG PLURALITY OF MESSAGES IN CONSIDERATION OF USER ATTRIBUTES | S830 |

Fig. 8

# FIG. 9

| PREPARE PLURALITY OF MESSAGES BASED ON USER ATTRIBUTES VIA SERVER | S910 |

| SEND A PLURALITY OF MESSAGES TO DEVICE TO PRESENT AT LEAST ONE MESSAGE TO USER IN CONSIDERATION OF THE USER ATTRIBUTES | S920 |

Fig. 9

# FIG. 10

120

110

112
MESSAGE PREPARING UNIT

114
MESSAGE PROVIDING UNIT

Fig. 10

# FIG. 11

WHEN DETECTING EVENT ON WHICH
USE OF DEVICE IS STOPPED
TERMINATE TO DETECT EVENT OF INTEREST

START TO DETECT EVENT OF INTEREST
WHEN DETECTING EVENT ON
WHICH USE OF DEVICE IS STARTED

START ⟶ ( STAND BY ) ⟶ ( DETECT EVENT OF INTEREST )

PUSH MESSAGE WHEN
DETECTING EVENT OF INTEREST

Fig. 11

EP 3 040 926 A1

# FIG. 12

TRANSMIT MESSAGES FROM
SERVER TO TERMINAL — S1210

START DETECTING EVENTS OF
INTEREST WHEN USER STARTS USING DEVICE — S1220

DETECT PREDEFINED CONCERNED
EVENT GENERATED FROM TERMINAL
AS USER USES TERMINAL — S1230

PROVIDE MESSAGE TO USER WHEN
TERMINAL DETECTS EVENT OF INTEREST — S1240

STOP DETECTING EVENTS OF INTEREST UNTIL
DEVICE USAGE START IS DETECTED
WHEN USER STOPS USING DEVICE — S1250

Fig. 12

# FIG. 13

120

127

MESSAGE
RECEIVING UNIT

128a

RELEVANT EVENT
DETECTING UNIT

128b

MESSAGE
PROVIDING UNIT

129a

DEVICE USAGE
START
DETECTING UNIT

129b

DEVICE USAGE
STOP
DETECTING UNIT

110

Fig. 13

# FIG. 14

```
┌─────────────────────────────────────────┐
│          RECEIVE MESSAGES                │
│       FROM SERVER TO DEVICE              │ ～S1410
└─────────────────────────────────────────┘
                    │
                    ▼
┌─────────────────────────────────────────┐
│    CALCULATE INTERRUPTIBILITY OF USER,   │
│          WHICH IS THE PROBABILITY        │ ～S1420
│    THAT USER WILL RESPOND TO MESSAGES    │
└─────────────────────────────────────────┘
                    │
                    ▼
┌─────────────────────────────────────────┐
│       DETERMINING WHETHER OR NOT TO      │
│  PRESENT MESSAGES IN CONSIDERATION OF    │ ～S1430
│     CALCULATED INTERRUPTIBILITY AND      │
│       STATE OF FORBIDDING MESSAGES       │
└─────────────────────────────────────────┘
```

Fig. 14

# FIG. 15

Fig. 15

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 452 988 A1 (MICROSOFT CORP [US]) 1 September 2004 (2004-09-01) * abstract * * paragraph [0008] - paragraph [0011] * * paragraph [0014] - paragraph [0060] * * figures 1-5 * | 1-20 | INV. G06Q30/02 |
| A | EP 1 225 529 A1 (SAGEM [FR]) 24 July 2002 (2002-07-24) * abstract * | 1-20 | |

TECHNICAL FIELDS
SEARCHED     (IPC)

G06Q

The present search report has been drawn up for all claims

| Place of search | Date of completion of the search | Examiner |
|---|---|---|
| The Hague | 28 April 2016 | Nicoli, Félix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 7937

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2016

| Patent document cited in search report | | Publication date | Patent family member(s) | | Publication date |
|---|---|---|---|---|---|
| EP 1452988 | A1 | 01-09-2004 | CN | 1551011 A | 01-12-2004 |
| | | | EP | 1452988 A1 | 01-09-2004 |
| | | | JP | 4471671 B2 | 02-06-2010 |
| | | | JP | 2004266815 A | 24-09-2004 |
| | | | KR | 20040077457 A | 04-09-2004 |
| | | | US | 2004030753 A1 | 12-02-2004 |
| | | | US | 2009099992 A1 | 16-04-2009 |
| EP 1225529 | A1 | 24-07-2002 | EP | 1225529 A1 | 24-07-2002 |
| | | | FR | 2819606 A1 | 19-07-2002 |
| | | | US | 2002095340 A1 | 18-07-2002 |

EPO FORM P0459

For more details about this annex : see Official Journal of the European Patent Office, No. 12/82

**EP 3 040 926 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120034907
- KR 1020070109329